# EUROPEAN PATENT SPECIFICATION

(11) **EP 3 150 066 B1**
(45) Date of publication and mention of the grant of the patent: **10.10.2018**
(21) Application number: 15192619.3
(22) Date of filing: 02.11.2015
(51) Int. Cl.: A01M 7/00, A01B 61/02, A01B 59/06

(54) **DAMPING SYSTEM FOR A SUSPENDED AGRICULTURAL SPRAYER**
DÄMPFUNGSSYSTEM FÜR EINE AUFGEHÄNGTE LANDWIRTSCHAFTLICHE SPRÜHEINRICHTUNG
SYSTÈME D'AMORTISSEMENT POUR UN PULVÉRISATEUR AGRICOLE SUSPENDU

(30) Priority: 29.09.2015 ES 201531390
(43) Date of publication of application: 05.04.2017
(73) Proprietor: EXEL INDUSTRIES, 51200 Epernay (FR)
(72) Inventor: GODIA RIBES, JOSE MARIA, 25110 ALPICAT (LLEIDA) (ES)
(74) Representative: Gaillarde, Frédéric F. Ch.

(56) References cited:
- EP-A1- 1 405 738
- EP-A1- 1 464 212
- EP-A2- 0 476 500
- FR-A1- 2 829 353

## Description

The present invention relates to the sector of suspended agricultural sprayers, and relates in particular to a damping system for an agricultural sprayer.

The purpose of agricultural sprayers, as the name suggests, is to spray liquid onto a cultivated field. The liquid is contained in a tank supported on a chassis, which is connected to an agricultural tractor for the transportation of the sprayer. Generally speaking, agricultural sprayers comprise an extension system, commonly known as "booms", which allow the liquid to be delivered at the furthest possible distance from the tank in order to cover the greatest possible extension of the field in each pass. The liquids that are usually sprayed contain phytosanitary products intended for the treatment of the crops in order to prevent diseases or insect pests, among others.

The weight of an agricultural sprayer is considerable, especially when the tank of liquid is full. The capacity of the tank of an agricultural sprayer of the state of the art is between 1,000 and 2,500 litres, depending on the model. On the other hand, the extension system that makes it possible to extend the pipes can weigh as much as 800 kg in the types with the longest reach. In addition, agricultural sprayers comprise an auxiliary water tank for cleaning the main tank once spraying is completed. The capacity of the auxiliary tank is approximately 10% of the capacity of the main tank. Finally, the sprayer is supported on a chassis that can weigh up to 600 kg, which means that the total weight that must be supported by the agricultural tractor may, in the larger models, amount to approximately 4,000 kg or 5,000 kg.

Suspended agricultural sprayers are characterised in that they are supported by a tractor in an elevated position with respect to the ground, both during their transportation and during their use, that is, including the spraying process. Many of the accessories that are connected to a tractor, as in the case of sprayers of the state of the art, are suitable to be coupled to a connection known as a "three-point connection". This form of connection consists in that the tractor has three points of attachment: two lower arms and one upper arm arranged in the centre of the two said arms.

The agricultural sprayers of the state of the art comprise rigid connections with the lower arms of the three-point connection. This means that the movements caused by irregularities in the ground and brusque manoeuvres of the tractor are transmitted to the mass of liquid contained in the tank. Due to its fluidity, the liquid generates forces against the walls of the tank, which are transmitted to the tractor and cause discomfort for the operator driving it, as well as causing fatigue stresses to the structure that supports the tank, reducing its useful life. In addition, there are stresses in the extension elements, located behind the sprayer, both in their position of use and in their folded position during transportation.

Given the disadvantages of the rigid connections of the lower arms of a tractor with the chassis of an agricultural sprayer, it is known from FR 2 829 353,a damping system for a suspended agricultural sprayer, the said agricultural sprayer comprising a supporting chassis, said damping system comprising a connector adapted to be attached to the chassis by means of an articulation, the said connector comprising a receiving area adapted to receive a coupling member of the rear part of an agricultural tractor, the said receiving area being eccentric with respect to the articulation to which the connector is adapted to be attached, the said connector comprising a damping element actuated against a wall of the chassis by the rotation of the connector around the articulation, the said rotation being caused by the action of the coupling member on the receiving area.

The damping system of this document makes possible to prevent that brusque movements caused, for example, by irregularities of the ground be transmitted to the sprayer and vice versa, i.e. from the sprayer to the tractor, thus preventing them from causing discomfort to the operator. This extends the useful life both of the tractor components that hold the sprayer and of the different parts of the sprayer, in particular the chassis and the extension elements.

However, according to an analysis which, by itself, is already a part of the invention, it has been observed that when the chassis is entirely free to rotate, there is an important deterioration of the damping element.

An object of the invention is to dampen the relative movements of the sprayer and the tractor, while at the same time minimizing the deterioration of the damping element.

To this effect, the connector comprises an upper stop that limits the actuation on the damping element.

Preferably, the connector comprises an upper stop that limits the actuation of the damping element, and a lower stop that defines a position of minimum actuation of the damping element. The lower stop holds the connector in a suitable position to be attached to a coupling member on the back of a tractor, while the upper stop prevents the damping element from using up all of its travel. If the damping element were susceptible to plastic deformation, the upper stop would prevent such plastic deformation from occurring.

Optionally, the damping element is arranged above the articulation, the upper stop is arranged above the articulation, and the lower stop is arranged below the articulation.

In an embodiment of the invention, the damping element is a piece of elastomer material.

Preferably, the receiving area is composed of two recesses with curved ends for receiving a bar connected to the lower arms of a three-point connection of an agricultural tractor.

Optionally, the said chassis wall remains, during use, in an oblique attitude with respect to the vertical. In this way, vertical and the horizontal damping is provided.

Preferably, the damping system comprises two connectors. More preferably, the said articulation is provided in each of the two connectors displaced to opposite sides with respect to the damping element, the said two connectors being interchangeable with each other. This feature makes it possible to vary the distance between the connecting points of the connectors with the lower arms of an agricultural vehicle, with the ability to be adapted to two different distances between the said arms.

Optionally, the said chassis comprises two connecting points of a connector, with the two connecting points being situated at different heights. This makes it possible to use the connector to hitch the chassis to lower arms of an agricultural vehicle that are arranged at different heights.

To allow a clearer understanding, by way of explanatory and non-limitative example, some drawings are attached of an embodiment of the damping system forming the subject of the present invention.
Figure 1 shows a schematic lateral view of an agricultural tractor with three-point connection attached to an agricultural sprayer.
Figure 2 shows a perspective view of a detail of the lower part of the chassis of the agricultural sprayer of Figure 1.
Figure 3 shows a perspective view of the front part of a connector of the damping system forming the subject of the present invention.
Figure 4 shows a perspective view of a detail of the rear part of the connector of Figure 3.
Figure 5 shows a lateral elevation view of the connector of Figure 3 attached to the chassis of an agricultural sprayer, in which the connector is in its initial position.
Figure 6 shows a lateral elevation view of the connector of Figure 3 attached to the chassis of an agricultural sprayer, in which the connector is in its final position.
Figure 7 shows an elevation view of the rear part of the damping system forming the subject of the present invention.

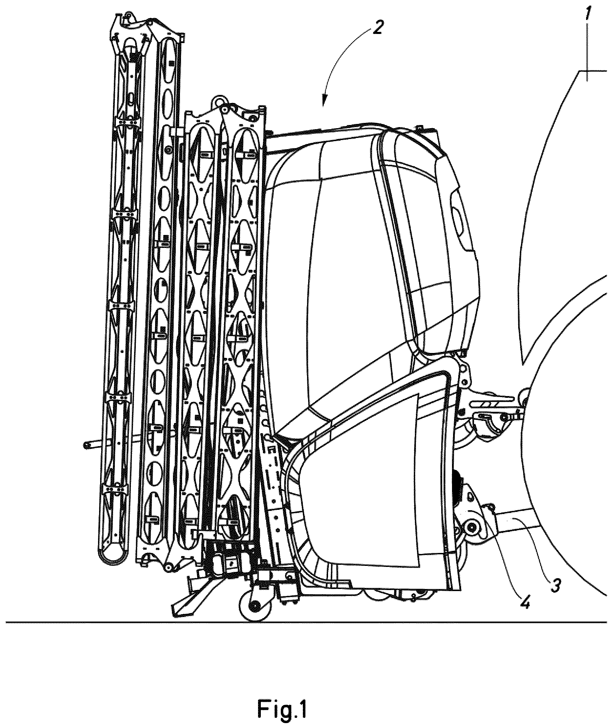

Figure 1 shows an agricultural tractor -1- attached to an agricultural sprayer -2- via a three-point connection system. The lower arms of the tractor -3- are in contact with the damping system forming the subject of the present invention, which has two connectors -4-. Figure 1 shows only one lower arm -3- and one connector -4- due to the perspective of the drawing. The connectors -4- are arranged between the lower arms -3- of the tractor -1- and the agricultural sprayer -2-, acting as a damping interface between the two.

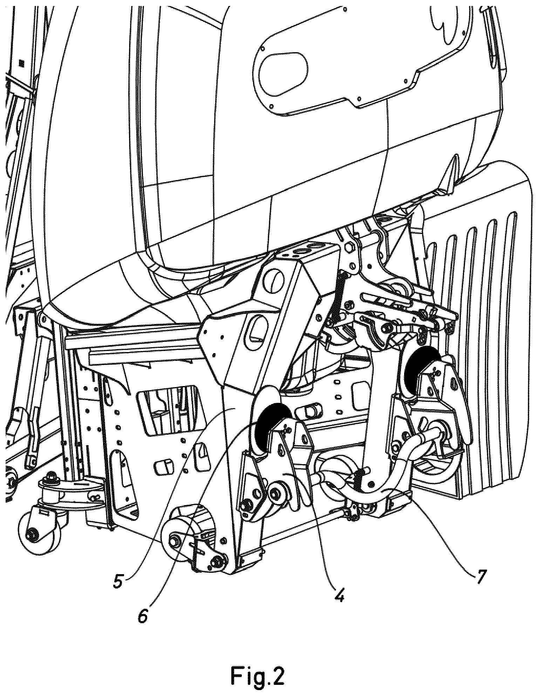

The connectors -4- are fixed in an articulated manner to the chassis -5- of the agricultural sprayer (see Figure 2) and comprise a piece of elastomer material -6-, which is the element responsible for damping the relative movements between the chassis -5- and the connectors -4-. The damping system is formed by two identical connectors -4-arranged symmetrically left-to-right, one for each lower arm -3- of the tractor -1-. Between the two connectors -4-of the damper system extends a cylindrical bar -7-, which is supported on the lower arms -3- of the tractor -1-prior to entry into contact with the damping system. In Figure 2, for reasons of clarity the lower arms -3- of the tractor -1- have not been represented.

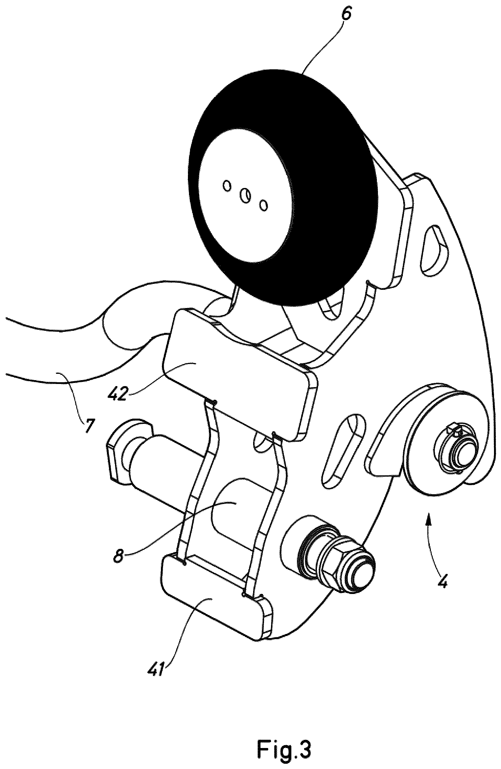

As seen in Figure 3, the connector -4- has in its front part a lower stop -41- situated at the lower end of the said connector -4- and a piece of elastomer material -6-at the end opposite to the said lower end of the connector -4-. Between the said upper and lower ends, the connector -4- comprises an upper stop -42-. Both stops -41-, -42-define the limits of rotation of the connector -4- about its articulation with the chassis -5- of the sprayer -2-. The connector -4- is fixed to the chassis -5- of the sprayer -2- by means of a pin -8-, the said pin -8-representing the axis of articulation of the connector -4-.

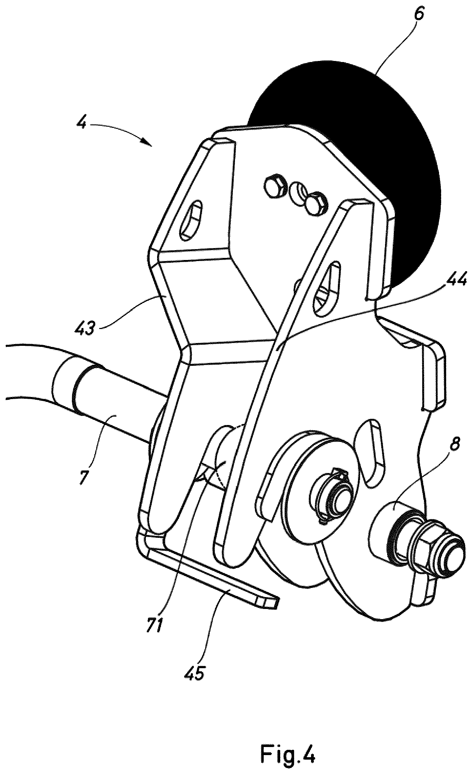

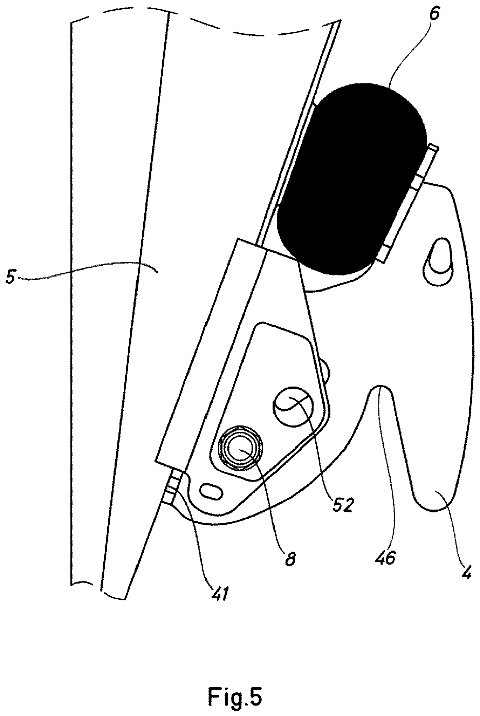

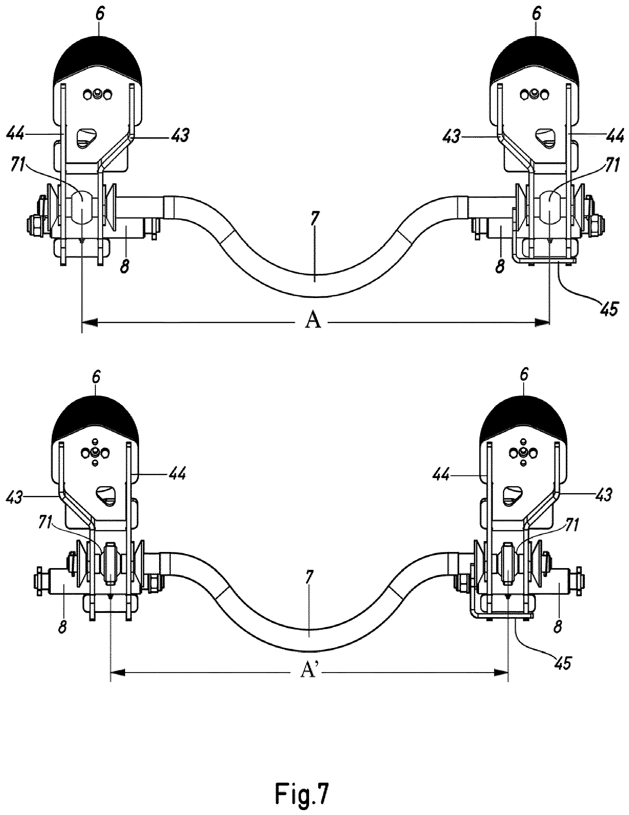

On its rear part (Figure 4), the connector -4- has two profiles -43-, -44-. On one side, the connector comprises an offset profile -43-, and on the other side, a straight profile -44-. Between the profiles -43-, -44- can be seen a ball -71- (see Figure 7) that belongs to the bar -7-. The lower arms -3- of the tractor come in contact with the balls -71- to elevate the chassis -5- of the sprayer -2-, allowing rotation of the lower arms -3- of the tractor -1-on the balls -71- during the manoeuvres of raising and lowering the agricultural sprayer -2-. Each connector -4-is supported on the bar -7- on both sides of the corresponding ball -71- (see Figure 7). To this end, it has a receiving area -46- (see Figure 5).

The purpose of the offsetting of the profile is to provide a displacement between the central point of the elastomer material -6- and the ball -71- on which the connector -4-is supported (see Figure 7).

As can be seen in Figure 4, the cylindrical bar -7- has an L-shaped projection -45-. This projection -45- prevents the rotation of the bar -7- once the lower arms -3- are in contact with the balls -71-. The cylindrical bar -7- is curved (see Figures 2 and 7), and its rotation could cause impacts against other parts of the tractor -1-.

Figure 5 shows the connector -4- in the position of minimum displacement of the damping element, which in the illustrated embodiment is a piece of elastomer material -6-. In other words, when the tractor -1- is separated from the sprayer -2- and therefore the lower arms -3- are not exerting any force on the connector -4-. In this situation, the lower stop -41- of the connector -4- makes contact with the chassis -5- and the elastomer material part -6- is in its position of minimum deformation. The position of minimum displacement corresponds to the minimum actuation of the damping element.

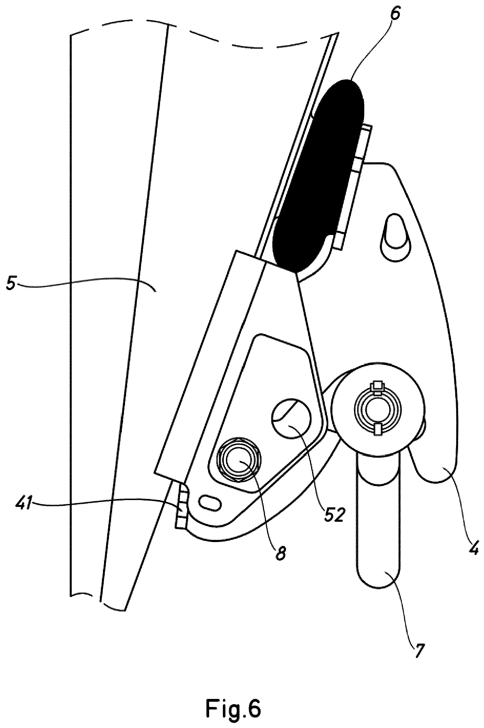

The chassis -5- has an additional hole -52- (see Figures 5 and 6) suitable for receiving the pin -8-. The connector -4- can be repositioned by unscrewing the pin -8- and raising the part until it engages with the hole -52-, and then inserting the pin -8- to effect the fixing in the said hole -52-. The left-to-right symmetrical arrangement of the connectors -4- allows their interchangeability in order to vary the distance A,A' between balls -71- thanks to the displacement between the central point of contact of the elastomer material -6- and the corresponding ball -71- (see Figure 7). The two possible positions of the pin -8-, combined with the left-to-right interchangeability, make it possible to adapt the damping system to agricultural tractor categories 2 and 3, which correspond to two categories with different distances between the lower arms -3- and different heights of the said lower arms -3-.

Figure 6 shows the connector -4- in the position of maximum actuation of the damping element, which in the illustrated embodiment is a piece of elastomer material -6-. To reach this position, the cylindrical bar -7-, resting on the lower arms -3- of the tractor -1-, initially comes in contact with the receiving area -46-(see Figure 5), which has two profiles with a curved shape. The said receiving area -46- is intended to receive the bar -7- located on the lower arms -3- of the tractor -1-. The force exerted by the bar -7- in the receiving area -46- causes the connector -4- to rotate about its articulation, i.e. about the pin -8-, due to the eccentricity of the receiving area -46- with respect to the articulation -8-. In other words, the distance between the receiving area -46- and the pin -8- causes the force exerted on the receiving area to rotate the connector -8-.

When the connector -4- begins to rotate, the lower stop -41- ceases to be in contact with the chassis -5- and the elastomer material part -6- is pressed against the chassis -5-. This rotational movement ends when the upper stop -42- contacts the chassis -5- (not shown), at which moment the position of maximum actuation of the elastomer material -6- part is reached, as shown in Figure 6. In this situation, the upper stop -42- limits the actuation of the elastomer material part -6- and prevents the said elastomer material part -6- from plastically deforming and losing its damping properties.

The connectors -4- of the damping system forming the subject of the present invention comprise offset profiles -43-, as shown in Figure 7. This offsetting means that the damping system can be adapted to agricultural tractors of categories 2 and 3, as described below.

The configuration shown in Figure 7 is suitable for category 3 agricultural tractors, having a distance A between balls -71-. Due to the offsetting of the offset profiles -43-, the central points of contact of the elastomer materials -6- are separated a distance less than the distance between the two balls -71-, i.e. less than the distance between the point of support of the lower arms -3-.

As mentioned, the connectors -4- can be interchangeably repositioned, placing the right-hand connector -4- on the left and vice versa. As a result, the distance A' between balls -71- is less, but the central points of contact of the elastomer materials -6- with the chassis -5- are in the same place. In this configuration, the distance A' between balls -71- is compatible with category 2 agricultural tractors since, thanks to the interchangeability, the elastomer materials -6- remain in the same position.

Although the invention has been presented and described with reference to embodiments of the same, it will be understood that these embodiments are not limitative of the invention, since there could be multiple variables in terms of manufacturing or other details that will be evident to a person skilled in the art after interpreting the subject matter disclosed in the present invention, claims and drawings. Consequently, all variants or equivalents will be included in the scope of the present invention if they can be considered to fall within the broadest scope of the following claims.

## Claims

1. Damping system for a suspended agricultural sprayer(2), the said agricultural sprayer comprising a supporting chassis(5), , said damping system comprising a connector (4) adapted to be attached to the chassis (5) by means of an articulation (8), the said connector comprising a receiving area (46) adapted to receive a coupling member (7) of the rear part of an agricultural tractor (1), the said receiving area being eccentric with respect to the articulation to which the connector is adapted to be attached, the said connector comprising a damping element (6) actuated against a wall of the chassis by the rotation of the connector around the articulation, the said rotation being caused by the action of the coupling member on the receiving area **characterised in that** the connector (4) comprises an upper stop (42) that limits the actuation on the damping element(6).

2. Damping system according to claim 1, **characterised in that** the connector (4) comprises a lower stop (41) that defines a position of minimum actuation on the damping element (6).

3. Damping system according to claim 2, **characterised in that** the damping element (6) is arranged above the articulation (8).

4. Damping system according to claim 3, **characterised in that** the upper stop (42) is arranged above the articulation (8).

5. Damping system according to claim 4, **characterised in that** the lower stop (41) is arranged below the articulation (8).

6. Damping system according to claim 6, **characterised in that** the damping element (6) is a piece of elastomer material.

7. Damping system according to claim 6, **characterised in that** the receiving area is composed of two recesses (46) with curved ends adapted to receive a bar connected to the lower arms of a three-point connection of an agricultural tractor.

8. Damping system according to claim 7, **characterised in that** the said chassis wall remains, during use, in an oblique attitude with respect to the vertical.

9. Damping system according to claim 1, **characterised in that** it comprises two connectors (4) .

10. Damping system according to claim 9, **characterised in that** the said articulation is provided in each of the two connectors (4) displaced to opposite sides with respect to the damping element, the said two connectors being interchangeable with each other.

11. Damping system according to claim 10, **characterised in that** the said chassis (5) comprises two connecting points of a connector, with the two connecting points at different heights.

## Patentansprüche

1. Dämpfungssystem für eine aufgehängte landwirtschaftliche Sprüheinrichtung (2), wobei die landwirtschaftliche Sprüheinrichtung ein tragendes Chassis (5) umfasst, wobei das Dämpfungssystem einen Anschluss (4) umfasst, welcher adaptiert ist, an dem Chassis (5) mithilfe einer Gelenkverbindung (8) angebracht zu werden, wobei der Anschluss einen Aufnahmebereich (46) umfasst, welcher adaptiert ist, ein Kupplungselement (7) des hinteren Teils eines landwirtschaftlichen Traktors (1) aufzunehmen, wobei der Aufnahmebereich in Bezug auf die Gelenkverbindung, an welcher der Anschluss adaptiert ist, angebracht zu werden, exzentrisch ist, wobei der Anschluss ein Dämpfungselement (6) umfasst, welches gegen eine Wand des Chassis mittels der Rotation des Anschlusses rund um die Gelenkverbindung betätigt wird, wobei die Rotation durch die Aktion des Kupplungselements auf den Aufnahmebereich verursacht wird, **dadurch gekennzeichnet, dass** der Anschluss (4) einen oberen Anschlag (42) umfasst, welcher die Betätigung auf dem Dämpfungselement (6) beschränkt.

2. Dämpfungssystem nach Anspruch 1, **dadurch gekennzeichnet, dass** der Anschluss (4) einen unteren Anschlag (41) umfasst, welcher eine Position von minimaler Betätigung auf dem Dämpfungselement (6) definiert.

3. Dämpfungssystem nach Anspruch 2, **dadurch gekennzeichnet, dass** das Dämpfungselement (6) oberhalb der Gelenkverbindung (8) angeordnet ist.

4. Dämpfungssystem nach Anspruch 3, **dadurch gekennzeichnet, dass** der obere Anschlag (42) oberhalb der Gelenkverbindung (8) angeordnet ist.

5. Dämpfungssystem nach Anspruch 4, **dadurch gekennzeichnet, dass** der untere Anschlag (41) unterhalb der Gelenkverbindung (8) angeordnet ist.

6. Dämpfungssystem nach Anspruch 6, **dadurch gekennzeichnet, dass** das Dämpfungsmaterial (6) ein Stück aus elastomerem Material ist.

7. Dämpfungssystem nach Anspruch 6, **dadurch gekennzeichnet, dass** der Aufnahmebereich aus zwei Aussparungen (46) mit gewölbten Enden besteht, welche adaptiert sind, eine Stange aufzunehmen, welche mit den unteren Armen eines Dreipunktanschlusses eines landwirtschaftlichen Traktors verbunden ist.

8. Dämpfungssystem nach Anspruch 7, **dadurch gekennzeichnet, dass** die Chassiswand während der Verwendung in einer Schräglage in Bezug auf die Vertikale verbleibt.

9. Dämpfungssystem nach Anspruch 1, **dadurch gekennzeichnet, dass** es zwei Anschlüsse (4) umfasst.

10. Dämpfungssystem nach Anspruch 9, **dadurch gekennzeichnet, dass** die Gelenkverbindung in jedem von den zwei Anschlüssen (4) verschoben zu gegenüberliegenden Seiten in Bezug auf das Dämpfungselement bereitgestellt ist, wobei die zwei Anschlüsse untereinander austauschbar sind.

11. Dämpfungssystem nach Anspruch 10, **dadurch gekennzeichnet, dass** das Chassis (5) zwei Anschlusspunkte eines Anschlusses umfasst, wobei die zwei Anschlusspunkte auf unterschiedlichen Höhen liegen.

## Revendications

1. Système d'amortissement pour un pulvérisateur agricole suspendu (2), ledit pulvérisateur agricole comprenant un châssis de support (5), ledit système d'amortissement comprenant un connecteur (4) adapté pour être fixé au châssis (5) au moyen d'une articulation (8), ledit connecteur comprenant une zone de réception (46) adaptée pour recevoir un élément de couplage (7) de la partie arrière d'un tracteur agricole (1), ladite zone de réception étant excentrique par rapport à l'articulation à laquelle le connecteur est adapté pour être fixé, ledit connecteur comprenant un élément d'amortissement (6) actionné contre une paroi du châssis par la rotation du connecteur autour de l'articulation, ladite rotation étant provoquée par l'action de l'élément de couplage sur la zone de réception **caractérisé en ce que** le connecteur (4) comprend une butée supérieure (42) qui limite l'actionnement sur l'élément d'amortissement (6).

2. Système d'amortissement selon la revendication 1, **caractérisé en ce que** le connecteur (4) comprend une butée inférieure (41) qui définit une position d'actionnement minimal sur l'élément d'amortissement (6).

3. Système d'amortissement selon la revendication 2, **caractérisé en ce que** l'élément d'amortissement (6) est agencé au-dessus de l'articulation (8).

4. Système d'amortissement selon la revendication 3, **caractérisé en ce que** la butée supérieure (42) est agencée au-dessus de l'articulation (8).

5. Système d'amortissement selon la revendication 4, **caractérisé en ce que** la butée inférieure (41) est agencée en dessous de l'articulation (8).

6. Système d'amortissement selon la revendication 6, **caractérisé en ce que** l'élément d'amortissement (6) est une pièce en matériau élastomère.

7. Système d'amortissement selon la revendication 6, **caractérisé en ce que** la zone de réception est composée de deux évidements (46) ayant des extrémités incurvées adaptées pour recevoir une barre reliée aux bras inférieurs d'une liaison en trois points d'un tracteur agricole.

8. Système d'amortissement selon la revendication 7, **caractérisé en ce que** ladite paroi de châssis reste, en cours d'utilisation, dans une orientation oblique par rapport à la verticale.

9. Système d'amortissement selon la revendication 1, **caractérisé en ce qu'**il comprend deux connecteurs (4).

10. Système d'amortissement selon la revendication 9, **caractérisé en ce que** ladite articulation est prévue dans chacun des deux connecteurs (4) déplacés sur des côtés opposés par rapport à l'élément d'amortissement, lesdits deux connecteurs étant interchangeables l'un avec l'autre.

11. Système d'amortissement selon la revendication 10, **caractérisé en ce que** ledit châssis (5) comprend deux points de liaison d'un connecteur, avec les deux points de liaison à des hauteurs différentes.
